(19) Europäisches Patentamt
European Patent Office
Office européen des brevets

(11) **EP 3 016 458 B1**

(12) **EUROPEAN PATENT SPECIFICATION**

(45) Date of publication and mention
of the grant of the patent:
**06.06.2018 Bulletin 2018/23**

(51) Int Cl.:
***H04W 24/00*** (2009.01)     ***H04W 72/02*** (2009.01)

(21) Application number: **14306734.6**

(22) Date of filing: **30.10.2014**

(54) **Apparatus, Method and Computer Program for providing information related to a predicted channel state**

Vorrichtung, Verfahren und Computerprogramm zur Bereitstellung von Informationen bezüglich eines prognostizierten Kanalstatus

Appareil, procédé et programme informatique pour fournir des informations relatives à un état de canal prédit

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.05.2016 Bulletin 2016/18**

(73) Proprietor: **Alcatel Lucent
91620 Nozay (FR)**

(72) Inventor: **Valentin, Stefan
70438 Stuttgart (DE)**

(74) Representative: **Wetzel, Emmanuelle et al
Nokia Solutions and Networks GmbH & Co. KG
Lorenzstraße 10
70435 Stuttgart (DE)**

(56) References cited:
• **ABOU-ZEID HATEM ET AL: "Toward green media delivery: location-aware opportunities and approaches", IEEE WIRELESS COMMUNICATIONS, IEEE SERVICE CENTER, PISCATAWAY, NJ, US, vol. 21, no. 4, 1 August 2014 (2014-08-01) , pages 38-46, XP011557551, ISSN: 1536-1284, DOI: 10.1109/MWC.2014.6882294 [retrieved on 2014-08-22]**

• **POSTON J D ET AL: "Ontology-based reasoning for context-aware radios: insights and findings from prototype development", 2005 1ST IEEE INTERNATIONAL SYMPOSIUM ON NEW FRONTIERS IN DYNAMIC SPECTRUM ACCESS NETWORKS, IEEE, BALTIMORE, MD, USA, 8 November 2005 (2005-11-08), pages 634-637, XP010855165, DOI: 10.1109/DYSPAN.2005.1542685 ISBN: 978-1-4244-0013-3**
• **DIMITRIOU NIKOS ET AL: "Context-aware Radio Resource Management in HetNets", 2014 IEEE WIRELESS COMMUNICATIONS AND NETWORKING CONFERENCE WORKSHOPS (WCNCW), IEEE, 6 April 2014 (2014-04-06), pages 93-98, XP032668364, DOI: 10.1109/WCNCW.2014.6934867 [retrieved on 2014-10-22]**
• **HANAN ALHAZMI ET AL: "Context-Aware Management Scheme for service continuity", TELECOMMUNICATIONS (ICT), 2012 19TH INTERNATIONAL CONFERENCE ON, IEEE, 23 April 2012 (2012-04-23), pages 1-6, XP032188372, DOI: 10.1109/ICTEL.2012.6221315 ISBN: 978-1-4673-0745-1**

## Description

Technical Field

Embodiments relate to an apparatus, a mobile device, a base station transceiver, an adaptation server, a method and a computer program for providing information related to a predicted channel state, more particularly but not exclusively to using a second radio system to predict a future channel state of a first radio system.

Background

This section introduces aspects that may be helpful in facilitating a better understanding of the invention(s). Accordingly, the statements of this section are to be read in this light and are not to be understood as admissions about what is in the prior art or what is not in the prior art.

In mobile communication systems, the quality and transmission speed of the network depends on many factors, for example the distance of the mobile device to the base station, obstacles blocking the line of sight to a base station, the amount of data currently requested by other mobile devices, the technology and protocols used etc. As the transmitted data rate may range from a few kilobits per second or less to hundreds of megabits per second, some content providers may provide their content in different quality levels, to account for different transmission capacity scenarios. Some providers of streaming video content have, for example, long provided different quality levels of their content, to match different transmission capacities and screen sizes.

Mobile devices, such as used in a mobile communication system, may use a number of different radio systems, such as Long Term Evolution (LTE), a High Speed Packet Access (HSPA), a Universal Mobile Telecommunication System (UMTS), a Global System for Mobile communication (GSM), Wireless Local Area Network (WLAN) IEEE 802.11, Global Positioning System (GPS), digital radio, Bluetooth. Such radio systems may all use different frequency ranges, radio transmission power levels, hardware, and algorithms so in combination, they may represent a whole range of diverse radio transmitters and receivers with diverse characteristics.

Further information can be found in:

Google Inc., "Android Developer Portal: Location API Description", Available at http://developer.android.com/reference/android/location/Location.html#getAccuracy. URL retrieved on Sep. 20, 2014,
Alcatel-Lucent, "Bell Labs and net mobile AG improve the quality of video streaming in vehicles on the move", Press release available at http://www.alcatel-lucent.com/press/2014/bell-labs-and-net-mobile-ag-improve-quality-video-streaming-vehicles-move, June 17, 2014. URL retrieved on Sep. 20, 2014,
C. Phillips, D. Sicker, and D. Grunwald, "A Survey of Wireless Path Loss Prediction and Coverage Mapping Methods," Communications, Surveys Tutorials, IEEE, vol. 15, no. 1, pp. 255-270, 2013,
M. Piacentini and F. Rinaldi, "Path loss prediction in urban environment using learning machines and dimensionality reduction techniques," Computational Management Science, vol. 8, no. 4, pp. 371-385, 2011. [Online]. Available: http://dx.doi.org/10.1007/s10287-010-0121-8,
1. Popescu, I. Nafomita, P. Constantinou, A. Kanatas, and N. Moraitis, "Neural networks applications for the prediction of propagation path loss in urban environments," in Vehicular Technology Conference, 2001. VTC 2001 Spring. IEEE VTS 53rd, vol. 1, 2001,
ABOU-ZEID HATEM ET AL: "Toward green media delivery: location-aware opportunities and approaches", IEEE WIRELESS COMMUNICATIONS, IEEE SERVICE CENTER, PISCATAWAY, NJ, US, vol. 21, no. 4, 1 August 2014 (2014-08-01), pages 38-46, ISSN:1536-1284, DOI: 10.1109/MWC.2014.6882294, disclosing location-aware predictive streaming in a communications network, and
POSTON J D ET AL: "Ontology-based reasoning for context-aware radios: insights and findings from prototype development", 2005 1ST IEEE INTERNATIONAL SYMPOSIUM ON NEW FRONTIERS IN DYNAMIC SPECTRUM ACCESS NETWORKS, IEEE, BALTIMORE, MD, USA, 8 November 2005 (2005-11-08), pages 634-637, DOI: 10.1109/DYSPAN.2005.1542685, ISBN: 978-1-4244-0013-3 disclosing methods for context-aware radios to adapt communication links and protocols based on positioning information.

Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide an apparatus, a mobile device, a base station transceiver, an adaptation server, a method and a computer program for providing information related to a predicted channel state at a receiver of a first radio system. Various adaptation functions in wireless networks may profit from a prediction of the wireless channel state, such as, e.g., handover optimization, scheduling, or adaptation of a content configuration, such as a quality level, to a predicted channel state or transmission capacity.

Embodiments provide an apparatus for providing information related to a predicted channel state at a receiver of a first radio system. The apparatus comprises at least one receiver module to receive radio signals of the first radio system and radio signals of a second radio system. An effect of radio channel shadowing is higher on the radio signals of the second radio system than on the radio signals of the first radio system. The apparatus further comprises a control module to determine a current channel state for the second radio system based on the radio signals of the second radio system. The control module further provides information related to a better predicted channel state for the first radio system if the information related to the current channel state of the radio signals of the second radio system indicates a better current channel state of the second radio system. It also provides information related to a worse predicted channel state for the first radio system if the information related to the current channel state of the radio signals of the second radio system indicates a worse current channel state of the second radio system. Information related to the current channel state of the radio signals of the second radio system, which is more sensitive to radio channel shadowing, may so be used to predict the future channel state of the first radio system.

In some embodiments, the first radio system may correspond to a terrestrial radio system and the second radio system may correspond to a satellite radio system. In some other embodiments, the first and second radio systems may correspond to terrestrial radio systems, and the first radio system may operate in a lower frequency range than the second radio system. Signals sent using a satellite radio system or signals sent on a radio system using a higher frequency range may be more sensitive to radio channel shadowing.

The receiver may correspond to a mobile device and the first radio system may correspond to a mobile communication system. The control module may be configured to obtain information related to a location accuracy of a determined location for the mobile device from a location module and the information related to the current channel state of the second radio system may correspond to the information related to the location accuracy of the mobile device. The control module may further be configured to provide first information related to a better predicted channel state of the mobile communication system if the information related to the location accuracy indicates a higher accuracy, and to provide second information related to a worse predicted channel state of the mobile communication system if the information related to the location accuracy indicates a lower accuracy. Information about the location accuracy of a mobile device may so be used to predict a future transmission capacity of the mobile device.

The better predicted channel state may correspond to a channel state supporting data transmission at a higher rate than in a channel state corresponding to the worse predicted channel state, so the information related to a predicted future channel state may be used to adapt the quality of content to be transmitted.

In various embodiment, the control module may be configured to provide information related to a predicted channel state in terms of at least one of the group of a receive signal power, a Receive Signal Strength Indicator (RSSI), an RSSI region or interval, a Signal-to-Noise-Ratio (SNR), a Signal-to-Interference Ratio (SIR), a Signal-to-Interference-and-Noise Ratio (SINR), a supported constellation size of the signal modulation, a supported rate of the forward error correction, a supported data rate, or a network or transmission mode, so the information related to a predicted channel state may be used in different scenarios.

In some embodiments the information related to the better predicted channel state of the first radio system and the information related to the worse predicted channel state of the first radio system may also be based on information related to a current channel state of the first radio system. It may further be based on information related to a channel state history of the first radio system. The additional information may be used to provide a more specific prediction, or it may be used to incorporate patterns of previous channel state in the prediction.

In some embodiments, the control module may be configured to use information derived from a set of Empirical Cumulative Distribution Functions (ECDF), where each element of the set reflects a channel state of the second radio system. The ECDF may partially represent the statistic of the channel state of the first radio system, to provide information related to the first predicted better channel state of the first radio system. It may also represent information related to the second predicted worse channel state of the first radio system. The ECDF may, in effect, be used to use a set of pre-gathered or pre-computed data to predict to predict a future channel state.

In various embodiments, the location module may be configured to obtain the information related to the location accuracy for the mobile device of the mobile communication system based on a weighted combination of one or more indicators related to a localization accuracy. The one or more indicators related to the localization accuracy may, in embodiments, be weighted based on one or more accuracies of the one or more indicators. Furthermore, the location module may be configured to obtain the information related to the location accuracy of the determined location for the mobile device based on a source or method used to determine a location of the mobile device.

In some embodiments, the location module may be configured to obtain information related to the location accuracy based on at least one element of the group of Global Positioning System (GPS), data, a Wireless Fidelity

(WiFi), Worldwide Interoperability for Microwave Access (WiMAX), Millimetre Wave, Access Points location database, a database of base station locations, a database of Cell IDentifications (CID), fingerprinting based on radio maps and Receive Signal Strength Indicators (RSSI), triangulation or trilateration of cellular base stations using Time-Division of Arrival (TDOA), or RSSI-based estimates using reference beacon signals from 802.11 or Bluetooth devices. The use of a number of different localization techniques may increase the accuracy of the prediction.

In some embodiments the control module may further be configured to determine information related to a presentation time of buffered media data at a media presentation device. In embodiments, the media data may be transmitted to the media presentation device through a transmission channel. The apparatus may further comprise an output configured to provide information related to the presentation time of the buffered media data, and the control module may further be configured to determine the information related to the presentation time based on information related to the predicted channel state. This information may then be used to determine the media segments to be transmitted to the media presentation device.

In embodiments, the control module may be configured to further provide information related to an estimated current channel state, and the information may be used to determine the content to be transmitted.

Embodiments further provide a mobile device, a base station transceiver, or an adaptation server comprising the apparatus, as the information related to a predicted channel state may help to determine a transmission strategy in a mobile device or a base station transceiver, and may help adapt the selection of content configurations at an adaptation server.

Embodiments further provide a base station transceiver or an adaptation server comprising the apparatus. The location module, in said embodiments may be configured to receive the information related to a location accuracy of a determined location from the mobile device. The prediction functionality might, in such embodiments, be transferred to the base station transceiver or the adaptation server.

Embodiments further provide a method for providing information related to a predicted channel state at a receiver of a first radio system. The method comprises receiving radio signals of the first radio system and receiving radio signals of a second radio system. An effect of radio channel shadowing is higher on the radio signals of the second radio system than on the radio signals of the first radio system. The method further comprises determining a current channel state for the second radio system based on the radio signals of the second radio system. It also comprises providing first information related to a better predicted channel state for the first radio system if the information related to the current channel state of the radio signals of the second radio system indicates a better current channel state of the second radio system and providing second information related to a worse predicted channel state for the first radio system if the information related to the current channel state of the radio signals of the second radio system indicates a worse current channel state of the second radio system.

Embodiments further provide a computer program having a program code for performing the above method, when the computer program is executed on a computer, a processor, or a programmable hardware component. A further embodiment is a computer readable storage medium storing instructions which, when executed by a computer, processor, or programmable hardware component, cause the computer to implement one of the methods described herein.

Brief description of the figures

Some other features or aspects will be described using the following non-limiting embodiments of apparatuses or methods or computer programs or computer program products by way of example only, and with reference to the accompanying figures, in which:

Fig. 1 illustrates a block diagram of an embodiment of an apparatus for providing information related to a predicted channel state at a receiver;

Fig. 2 illustrates a block diagram of an embodiment of an apparatus for proving information related to a predicted channel state at a mobile device of a mobile communication system;

Fig. 3 shows a table of an embodiment comprising location indicators and a weighting index;

Fig. 4 illustrates an embodiment for measuring localization accuracy as GPS confidence radius;

Fig. 5 shows a histogram of a GPS confidence radius measured on a Samsung Galaxy S2 Smartphone with Android 4.1 in a 6 hours vehicular measurement campaign;

Fig. 6 shows a block diagram of an embodiment of an apparatus comprising a location module and a control module;

Fig. 7 shows an Empirical Cumulative Distribution Function (ECDF) of 3047 RSSI measures obtained from a 6 hours vehicular measurement campaign in German city using a Samsung Galaxy S2 Smartphone with Android 4.1;

Fig. 8 illustrates a transition diagram of an embodiment based on two possible values of the TLE metric e;

Fig. 9 shows a transition diagram of an embodiment based on multiple possible values of the TLE metric e;

Fig. 10 shows a plot of TLE and RSSI versus traveling time of an embodiment for a mobile device obtained from a vehicular drive tests in a German city using a Samsung Galaxy S2 Smartphone with Android 4.1;

Fig. 11 illustrates a block diagram of an embodiment of an apparatus comprising a receiver module, a control module, and a location module;

Fig. 12 shows a block diagram of an embodiment of an apparatus providing information related to a presentation time to a presentation device;

Fig. 13 illustrates a block diagram of an embodiment of a mobile device comprising the apparatus;

Fig. 14 illustrates a block diagram an embodiment of a base station transceiver comprising the apparatus coupled to a mobile device;

Fig. 15 illustrates a block diagram an embodiment of an adaptation server comprising the apparatus coupled to a mobile device; and

Fig. 16 shows a block diagram of a flow chart of an embodiment of a method for providing information related to a predicted channel state at a receiver.

Description of Embodiments

Various example embodiments will now be described more fully with reference to the accompanying drawings in which some example embodiments are illustrated. In the figures, the thicknesses of lines, layers or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof. Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

For receivers of radio systems, e.g. mobile devices in a mobile communication system, the channel state can vary rapidly. Conventional solutions to adapt to changes in the channel state may include the large buffers of data to have time to react to a change, but use only information about a current channel state or former channel states, as information about a future channel state may not be available. Having such information related to a future channel state may be beneficial: The information may be used, for example, to trigger the pre-fetching of data before a deterioration of the channel state, or to adapt the streaming quality of a media.

Such long-term prediction of the channel state is a difficult problem due to the complex dynamics of the wireless channel at multiple time scales. As a result of multipath propagation and Doppler shift, fast fading causes fluctuations of the channel state at the order of milliseconds. Mobility, on the other hand, varies the distance between receiver and transmitter and, thus, leads to propagation loss that varies at the order of seconds.

While diversity techniques on multiple layers can compensate for fading, time-variant propagation loss poses a difficult problem for network adaptation functions such as scheduling, handover optimization, ICIC or application layer methods such as adaptive video streaming. Predicting the channel state at an order of seconds, allows to cope with the complex channel dynamic resulting from user mobility using the fundamental new approach of anticipatory adaptation. If the network can anticipate an upcoming change of the channel state, it can adapt in advance. For instance, filling a user's local buffer before (a predicted) degradation of the wireless channel state highly improves the quality of mobile video streaming. If the channel is predicted to improve, increasing the video quality or serving more users improves Quality-of-Service or spectral efficiency.

All these anticipatory adaptation functions rely on an accurate long-term prediction of the wireless channel state. It is the objective to provide such prediction system that can be readily implemented at high efficiency and low cost.

To this end, the prediction is based on side information that can be easily measured at the mobile device. This information is a measure of a second radio system, which many devices provide. These measures then have to be transformed into a bounded metric for a metric of a second channel state. This metric is then used to estimate the current channel state and, additionally, to predict the channel state the user is likely to experience in the future.

Receivers of such first and second radio systems may, in some cases, comprise transceivers or receivers for a number of different radio systems. For example, a mobile device in a mobile communication system may include transceivers to communicate in a range of different mobile networks, such as LTE, UMTS or GSM, or they may include other radio transceivers or receivers, for example GPS, WLAN or Bluetooth, which all have distinct characteristics and react with different sensitivity to obstacles of the radio systems.

These involved technical problems can be, thus, summarized as the development of a technique to translate the channel state of a second radio system and additional information:

(i) into an estimate of the current channel state, without being aware of the true value of current channel state, or
(ii) into a prediction of the future channel state.

The basic idea is to use the channel state of second radio system as an indicator for the channel state of a first radio system. Techniques are proposed to:

1. Estimate the current first channel state from a measure of a current second channel state and channel statistics.
2. Predict the future first channel state from a measure of a current second channel state with and without knowledge of the channel state history.

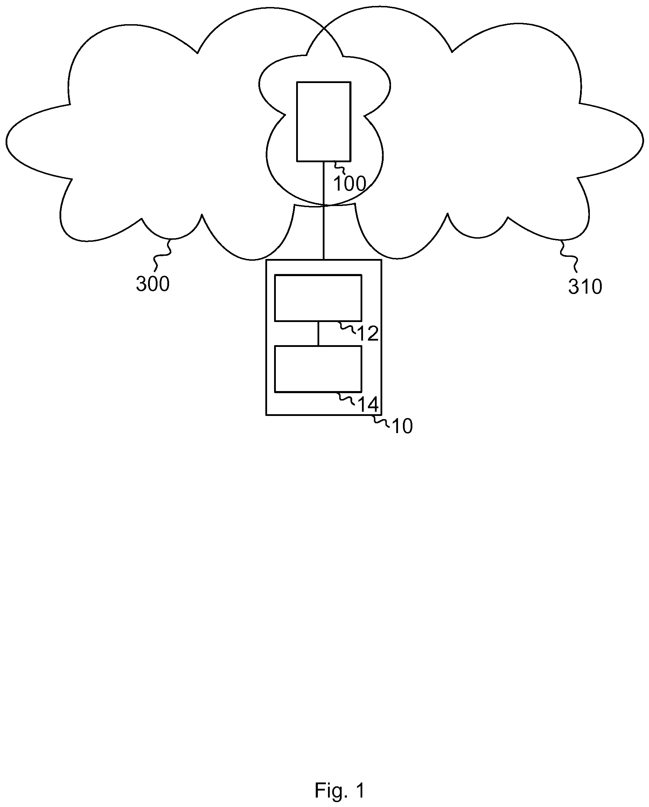

In the following, some embodiments for an apparatus, a mobile device, a base station transceiver, an adaptation server, a method and a computer program for providing information related to a predicted channel state will be described. Fig. 1 illustrates a block diagram of an embodiment of an apparatus 10, comprising at least one receiver module 12 and a control module 14. Fig. 1 further illustrates a first radio system 300, a second radio system 310, and a receiver 100. The at least one receiver module 12 is coupled to the control module 14, while the receiver 100 is coupled to the apparatus 10.

The apparatus 10 is configured to provide information related to a predicted channel state at a receiver 100 of a first radio system 300. A channel state may correspond to physical characterizations of a channel, such as, for example, signal receiver power or signal-to-noise ratio, to the capacity available on the radio system, or to the availability of different modulations, protocols or technologies, such as LTE or UMTS.

The apparatus 10 comprises at least one receiver module 12 to receive radio signals of the first radio system 300 and radio signals of a second radio system 310. An effect of radio channel shadowing is higher on the radio signals of the second radio system 310 than on the radio signals of the first radio system 300.

The receiver module 12, and correspondingly the receiver 12 as will be introduced in the sequel, may be implemented as any means for receiving or transceiving, i.e. receiving and/or transmitting etc., one or more receiver or transceiver units, one or more receiver or transceiver devices and it may comprise typical receiver and/or transmitter components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more antennas, etc.

The apparatus further comprises a control module 14 to determine a current channel state for the second radio system 310 based on the radio signals of the second radio system 310. The control module further provides information related to a better predicted channel state for the first radio system 300 if the information related to the current channel state of the radio signals of the second radio system 310 indicates a better current channel state of the second radio system 310, and to provide information related to a worse predicted channel state for the first radio system 300 if the information related to the current channel state of the radio signals of the second radio system 310 indicates a worse current channel state of the second radio system 310.

In embodiments the control module 14, may be implemented using one or more processing units, one or more processing devices, any means for processing, such as a processor, a computer or a programmable hardware component being operable with accordingly adapted software. In other words, the described functions of the control module 14 may as well be implemented in software, which is then executed on one or more programmable hardware components. Such hardware components may comprise a general purpose processor, a Digital Signal Processor (DSP), a micro-controller, etc.

In embodiments, the first radio system 300 may correspond to a terrestrial radio system and the second radio system 310 may correspond to a satellite radio system. A terrestrial radio system may, in some embodiments, correspond to, for example, an Long Term Evolution (LTE), Universal Mobile Telecommunication System (UMTS) or Global System for Mobile communication (GSM) radio system, while a satellite radio system may correspond to a GPS radio system, or a Satellite Digital Audio Radio Service (SDARS).

In further embodiments, the first 300 and second 310 radio systems may correspond to terrestrial radio systems, wherein the first radio system 300 operates in a lower frequency range than the second radio system 310. The first 300 and second 310 radio systems may, in embodiments, correspond to LTE radio systems operating in the 800 and 2500 MHz frequency range, or to other radio systems operating in different frequency ranges. Further examples of terrestrial radio systems, such as used in mobile communication systems, will be listed in more detail below.

In some embodiments, the control module may be configured to provide information related to a predicted channel state in terms of at least one of the group of a receive signal power, an RSSI, an RSSI region or interval, an SNR, a SIR, a SINR, a supported constellation size of the signal modulation, a supported rate of the forward error correction, a supported data rate, or a network or transmission mode.

In some embodiments, the better predicted channel state may correspond to a channel state supporting data transmission at a higher rate than in a channel state corresponding to the worse predicted channel state. This may be due to physical properties of a channel, such as, for example, signal receiver power or signal-to-noise ratio, or due to the availability of different modulations, protocols or technologies, such as LTE or UMTS.

In some embodiments, the information related to the better predicted channel state of the first radio system 300 and the information related to the worse predicted channel state of the first radio system 300 may also be based on information related to a current channel state of the first radio system 300 and/or information related to a channel state history of the first radio system 300. The additional information may be used to provide a more specific prediction, such as, for example, absolute values instead of relative values when taking the current channel state into account, or the information may be used to use patterns of previous channel state transitions for the prediction.

In various embodiments, the control module 14 may be configured to use information derived from a set of empirical cumulative distribution functions, ECDF, where each element of the set reflects a channel state of the second radio system. The ECDF may partially represent the statistic of the channel state of the first radio system, to provide information related to the better predicted channel state of the first radio system 300 or information related to the worse predicted channel state of the first radio system 300.

The control module 14 may also, in some embodiments, be configured to further provide information related to an estimated current channel state, as, in some embodiments, the estimated current channel state might be used for further optimization of information related to a predicted channel state, or to provide the information related to an estimated current channel state to modules exterior to the apparatus.

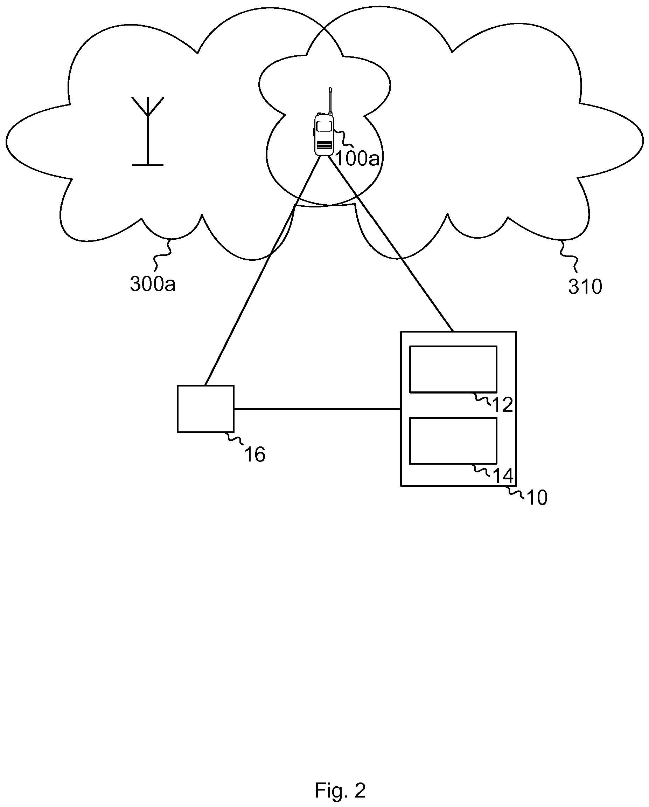

As Fig. 2 illustrates, in some embodiments, the receiver 100 may correspond to a mobile device 100a, and the first radio system 300 may correspond to a mobile communication system 300a.

In general, the mobile communication system may, for example, correspond to one of the Third Generation Partnership Project (3GPP)-standardized mobile communication networks, where the term mobile communication system is used synonymously to mobile communication network. The mobile or wireless communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Interoperability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

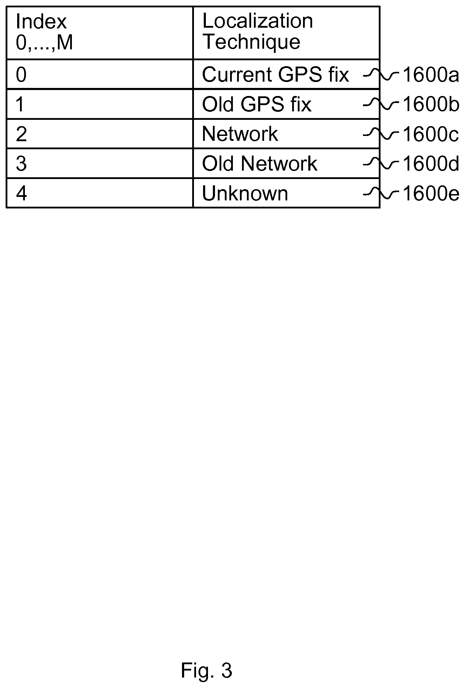

In embodiments, the control module 14 may be configured to obtain information related to a location accuracy of a determined location for the mobile device 100a from a location module 16. The location module 16 may be configured to obtain information related to the location accuracy based on at least one element of the group of GPS data, a WiFi, WiMAX, Millimeter Wave, Access Points location database, a database of base station locations, a database of CIDs, fingerprinting based on radio maps and RSSI, triangulation or trilateration of cellular base stations using TDOA, or RSSI-based estimates using reference beacon signals from 802.11 or Bluetooth devices. In some embodiments, the location module 16 may also be configured to obtain the information related to the location accuracy for the mobile device 100a of the mobile communication system 300a based on a weighted combination of one or more indicators related to a localization accuracy. The one or more indicators related to the localization accuracy may be weighted based on one or more accuracies of the one or more indicators. Fig. 3 shows, in embodiments, an example weighting table for a mobile device 100a running the Android mobile operating system, with Current GPS fix 1600a, Old GPS fix 1600b, Network 1600c, Old network 1600d and Unknown 1600e being the indicators of the location module 16.

As shown in Fig. 2, in the depicted embodiment the location module 16 is coupled to the apparatus 10 and to the mobile device 100a. In embodiments the location module 16 may be implemented using one or more location units, one or more location devices, any means for locating, such as a positioning receiver, such as a computer or a programmable hardware component being operable with accordingly adapted software configured to obtain one or more of the above-described information related to the location accuracy.

The location module 16 may further be configured to obtain the information related to the location accuracy of the determined location for the mobile device 100a based on a source or method used to determine a location of the mobile device 100a, as has been described above.

The information related to the current channel state of the second radio system 310 may correspond to the information related to the location accuracy of the mobile device 100a. The control module 14 may further be configured to provide first information related to a better predicted channel state of the mobile communication system 300a if the information related to the location accuracy indicates a higher accuracy, and to provide second information related to a worse predicted channel state of the mobile communication system 300a if the information related to the location accuracy indicates a lower accuracy.

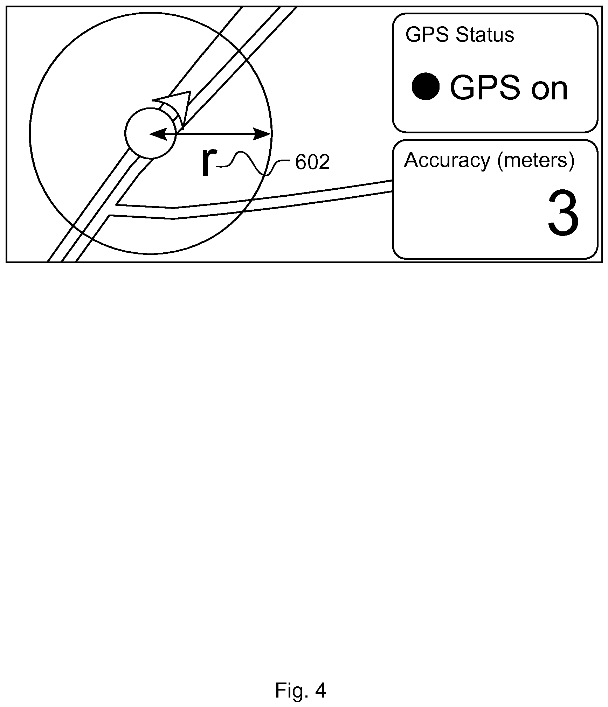

Fig. 4 illustrates, in an embodiment, the confidence radius r 602 of a as a well-known measure of localization accuracy. Although the figure uses the GPS as example, r may, in embodiments, be provided for arbitrary localization techniques using, for example,

- A database of IEEE 802.11 Access Point (AP) locations and the Service Set Identification (SSID) or the AP's Medium Access Control (MAC) address as available on the mobile device

- A database of base station locations and the list of received CIDs as available on the mobile device

- Fingerprinting based on radio maps and RSSI or other measures such as IEEE 802.11 AP MAC addresses

- Triangulation or trilateration of the mobile device through cellular base stations using TDOA or other techniques

- RSSI-based estimates using reference beacon signals from IEEE 802.11 or Bluetooth devices.

Assuming that a mobile device may support M such localization techniques, $r_0, \ldots, r_{M-1}$ may be used to point to the confidence radius of the individual techniques. It is assumed that the techniques are sorted according to their accuracy in descending order. That is, 1 may represent the in general most accurate technique (e.g., a fresh GPS fix) while M may represent the least accurate technique (e.g., an outdated fix based on CID-based fingerprinting). Fig. 3 illustrates such an ordered list for the most common location techniques on an Android device. Therein, "network" 1600c refers to techniques based on databases of IEEE 802.11 APs and base stations.

In typical mobile operation systems, a central software module called Location Manager may serve as an abstraction layer between the individual localization techniques and the applications. The Location Manager may, in embodiments, correspond to the location module 16. The Location Manager may use the individual accuracy measures $r_0, \ldots, r_{M-1}$ to select the specific localization technique and provides the accuracy r of the currently active technique to the application. Nonetheless, application programmers might choose a specific technique or provide selection criteria to the Location Manager.

A confidence radius r might only be interpreted together with a confidence level. A typical confidence level for mobile devices may be 68%, which represents the probability that the true location is inside the circle. Professional navigation devices may use higher values such as 95%. This confidence level increases the 3 m radius 602 from Fig.

4 to 5.7 m.

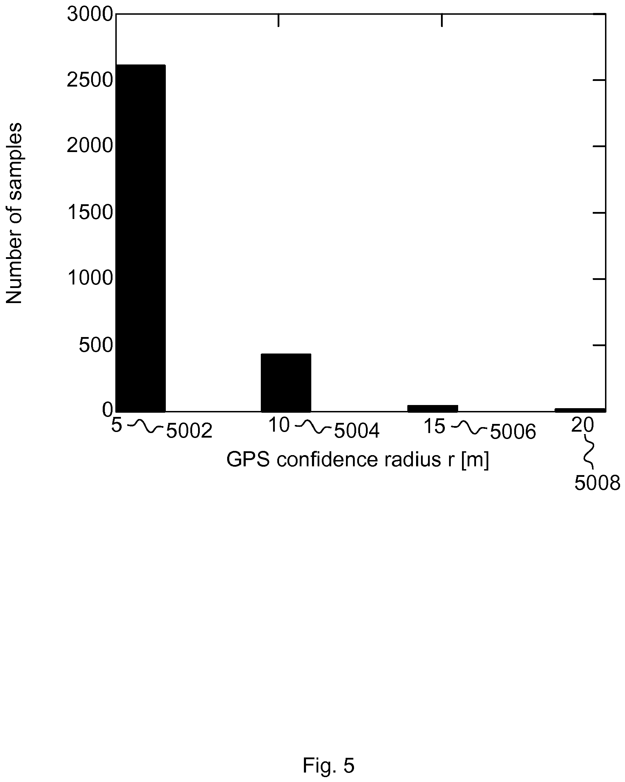

Although r may be a continuous value in general, in some embodiments, it may often be discrete in specific implementations. Fig. 5 illustrates this as a histogram of the confidence radius r 602 as measured on a Samsung Galaxy S2 Smartphone using Android 4.1. The histogram is based on 3047 samples from a 6 hours vehicular measurements campaign on highways and a German city. Over the complete measurement time, GPS signal coverage allowed to derive locations but with varying accuracy. In embodiments, the Smartphone may use only 4 values (5m 5002, 10m 5004, 15m 5006, 20m 5008) to express r for GPS.

In embodiments, the concept of a discrete accuracy metric may be applied to the localization technique, more specifically by expressing the accuracy of the localization by the index 0,..., *M.* In general, a new localization accuracy measure may be defined as

$$e = \{e_1, e_2, \ldots, e_M\} := \{0, 1/M, 2/M, \ldots, 1\}$$

As this metric increases with a higher general localization error of a particular technique M, e will be called Technology Localization Error (TLE) from now on. Applying this definition to Fig. 3 may result in a TLE of e = {0,0.25,0.5,0.75,1}.

A channel state is further used as an abstract term that may stand for the following specific metrics:

- Received signal power in W or, equivalently, dBm. Often called RSSI.
- RSSI region, i.e., a discrete value representing an RSSI interval or threshold
- SNR at the receiver
- SINR at the receiver
- Maximum data rate, as supported by the current network mode
- Current network mode (e.g., EDGE, HSDPA, LTE)

Although embodiments are not limited to a specific channel state metric, the following embodiments may target the prediction of an RSSI region and the estimation of RSSI as an example.

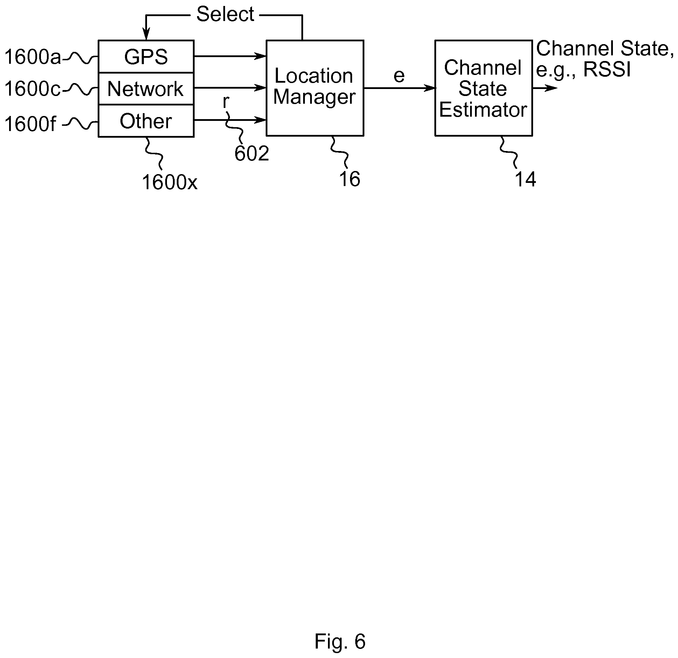

In this embodiment, the accuracy metric may be used to estimate a discrete value of RSSI, called RSSI region. Fig. 6 illustrates the main components of the system of the embodiment. Fig. 6 comprises the location manager 16 with indicators GPS 1600a, Network 1600c and Other 1600f and the control module 14. As all information is available at the application layer of a mobile device, the estimation might be directly performed there or, after signaling the input information, in a centralized unit such as a base station or adaptation server.

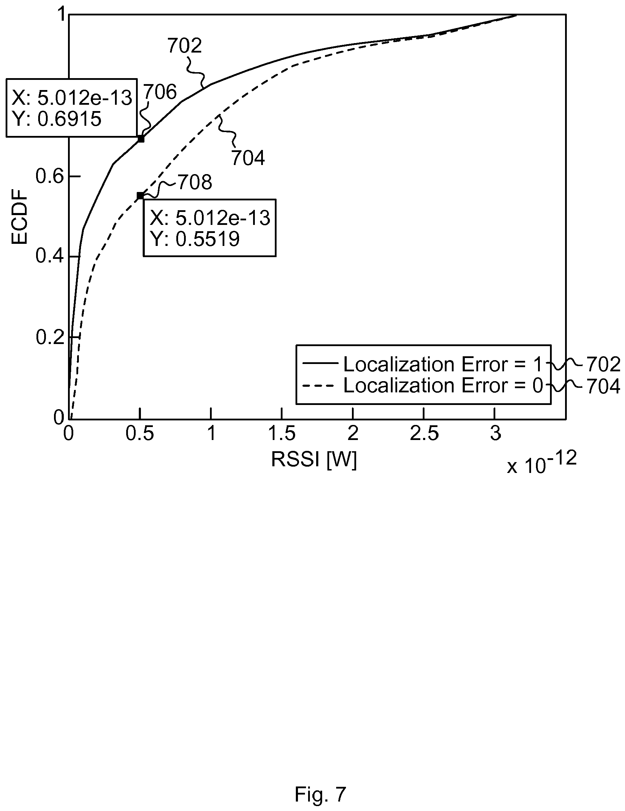

Fig. 7 illustrates the statistical effect applied for the estimation. According to these results, high values of e may indicate an increased probability of low RSSI values, corresponding to a worse predicted channel state. Consequently, specific value of e and RSSI may be mapped to a probability P from the ECDF. For instance the points 706 of graph 702 and 708 of graph 704,

$$P(e = 0, RSSI = 5.012e - 13\,W) = 0.55$$

and

$$P(e = 1, RSSI = 5.012e - 13\,W) = 0.69$$

This means that a high localization error, due to a lost GPS fix, may make it 14% more likely that the mobile device falls into a low RSSI region close to 5.012e-13 W (i.e., -123 dBm).

An estimation algorithm may apply the opposite mapping to obtain the RSSI from *P* and *e.* In this example

$$RSSI(e = 0, P = 0.55) = 5.012e - 13\,W$$

$$RSSI(e = 1, P = 0.69) = 5.012e - 13\,W$$

Assuming that the probability values of the individual values of *e* might significantly differ, e.g., *P(e* = 0) << *P(e* = 1), a distinct mapping from e to a RSSI region may be obtained, for instance

e=0 → Low RSSI region, e.g., *RSSI ≤ 5.012e - 13 W*
e=1 → High RSSI region, e.g., *RSSI > 5.012e - 13 W.*

In general, the discrete set $e = \{e_1, e_2, ..., e_M\}$ might be mapped to a set of RSSI thresholds $g = \{g_1, g_2, ..., g_M\}$ probability Pm associated to an arbitrary pair $< e_m, g_m >$ exceeds a certain significance level, e.g., of 5% or higher.

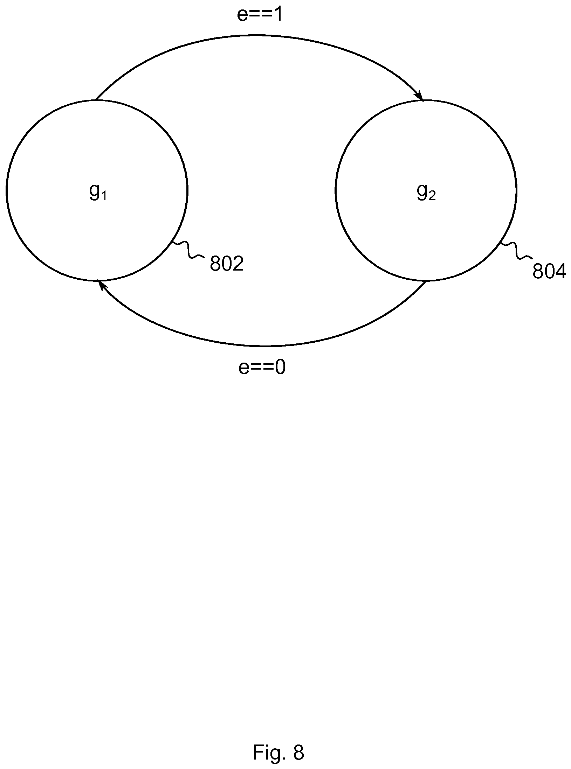

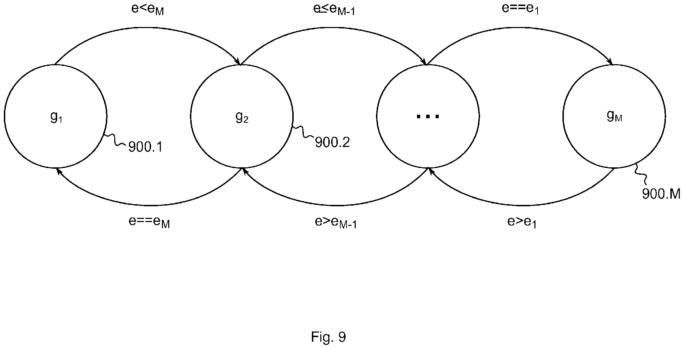

Fig. 8 and Fig. 9 illustrate how this procedure can be turned into an algorithm. Fig. 8 corresponds to the above example of two possible values 802 and 804 of e, while Fig. 9 shows a general version for an arbitrary number of localization techniques, using states 900.1, 900.2 to state 900.M. Either of these algorithms may represent a state machine that uses *e* to define the RSSI region of the mobile device. Since *e* was designed to be bounded within the interval [0,1], equality might be used as decision rule for the leftmost and rightmost states. For an unbounded but discrete localization accuracy metric, ≥ might be used for the transition to the leftmost state and ≤ might be used for the transition to the rightmost state.

In this embodiment, the decision might only be based on the localization technology error (TLE) and RSSI statistics. The actual RSSI values may be unknown by the estimator.

Since the above estimation may be performed instantaneously, which means that within any arbitrary time slot $t$ a specific TLE measure $e_m(t)$ may be mapped to a RSSI region $g_m(t)$.

In some embodiments, within any arbitrary time slot $t$ a specific TLE measure $e_m(t)$ may be mapped to a future discrete RSSI value $g(t + \Delta t)$. Here, $\Delta t$ specifies the lookahead time as the time window for which the RSSI regions may be predicted. Since it is assumed that the algorithm might operate on a discrete time axis, $\Delta t$ may be defined as a discrete set $\Delta t := \{0,1,2, ..., T\}$.

In a first embodiment, TLE may be directly mapped to future RSSI given by $e(t) \rightarrow g(t + \Delta t)$. Based on a statistical knowledge such as Fig. 7, an algorithm may be constructed using the following principle:

Input: ECDF over RSSI, Current TLE $e_m(t)$
Output: RSSI prediction $g_m(t + \Delta t)$

1. Obtain the probability value $P_m$ from ECDF according to the specific value $e_m(t)$
2. If $P_m$ exceeds a certain significance threshold (e.g., 5%): Look up the RSSI value $g_m(t + \Delta t)$ from ECDF

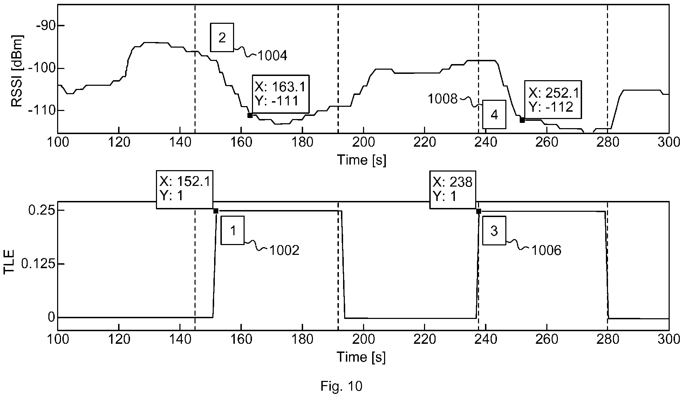

The validity of such simple prediction is shown in Fig. 10. Here, measurements of TLE and RSSI are shown versus synchronized traveling time. The measurement was obtained from a drive test using a Samsung Galaxy S2 Smartphone with Android 4.1. The supported localization modes are given in Table 3 but GPS coverage is available for most of the time. However, in this example, two tunnels are traversed. The time when the vehicle enters and leaves the tunnel is manually recorded. Entering is illustrated by a red vertical line while a green vertical line illustrates the time when the tunnel is left.

As soon as the vehicle enters the tunnel, GPS signal coverage is lost and the localization technique changed from 0 to 1 (cp. Fig. 3). Consequently, the TLE immediately increases from 0 to 1/4. This event is marked by 1002 and 1004 in the plot. It is interesting that the TLE increases before a significant decrease of the RSSI. For instance, event 1002 happens 11 s before 1004 and, even more clearly, event 1006 happens 14 s before 1008. Consequently, the TLE may indicate an upcoming decrease of the RSSI, corresponding to a predicted worse channel state, and represents promising side information for RSSI prediction.

In another embodiment, a variant of the above simple prediction algorithm might predict the RSSI gradient instead of a specific RSSI value or RSSI region. Other embodiments may use the RSSI history $g(t - B, t - B + 1, ... , t)$ as additional input for prediction. This history may be seen as a time vector over the previous $B$ time slots, which may be referred to as lookback time. Such predictors may perform a mapping

$$< e(t), g(t - B, t - B + 1, ..., t) > \rightarrow g(t + \Delta t)$$

and may not necessarily require access to RSSI statistics (e.g., an ECDF as in Fig. 7). A predictor based on this idea might, in embodiments, be constructed as follows:

Input: RSSI history $g(t - B, t - B + 1, ... , t)$, Current TLE $e(t)$
Output: RSSI prediction $g(t + \Delta t)$

1. Filter $g(t - B, t - B + 1, ... , t)$ to remove outliers, e.g., through a moving average or low pass filter
2. Compute gradient of filtered $g(t - B, t - B + 1, ..., t)$, store result in $d_g$
3. If $d_g < 0$ and $e(t) > 0$: Predict RSSI decrease as $g(t + \Delta t) = g(t) - \Delta$

4. Else if $d_g > 0$ and $e(t) = 0$: Predict RSSI increase as $g(t + \Delta t) = g(t) + \Delta$

5. Else: Predict no change in RSSI $g(t + \Delta t) = g(t)$

Simpler variants of this algorithms might use the instantaneous RSSI value $g(t)$ directly or in a filtered version, without computing the gradient. In such cases, RSSI history may not be required. More sophisticated variants of the algorithm might use thresholds for $d_g$ and $e(t)$ to predict a discrete RSSI value (i.e., RSSI region) instead of merely an RSSI increase or decrease.

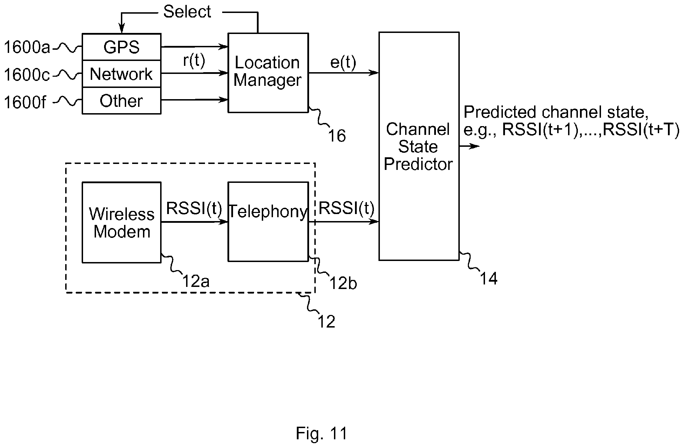

Fig. 11 illustrates the input and output of the embodiment and the involved components, as may be used in the second algorithm or similar algorithms. The figure comprises the location manager 16 with the indicators GPS 1600a, Network 1600c and Other 1600f, the receiver module 12 comprising a wireless modem 12a and a telephony module 12b, and the control module 14. The first algorithm may only require the structure given in Fig. 6. Either of these prediction techniques might be entirely implemented at the application layer of a mobile device (e.g., Smartphone, Tablet) or, within sufficient signaling, at a central adaptation server. Location Manager and Telephony may represent software functions the operation system provides as abstract layers to the localization techniques and wireless modem, respectively.

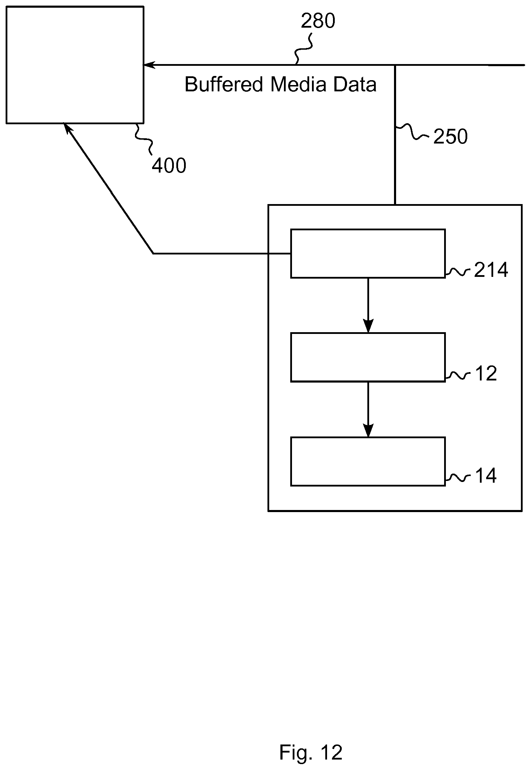

In some embodiments, as shown in Fig. 12, the control module 14 may further be configured to determine information related to a presentation time of buffered media data 250 at a media presentation device 400. The media presentation device might correspond to, in embodiments, the mobile device 100a, a smartphone, a tablet computer, a personal computer, a laptop computer, a navigation device, a television, a mobile television, a media streaming device, an internet radio receiver, an audio receiver, or a video receiver.

The media data may be transmitted to the media presentation device 400 through a transmission channel 280. The transmission channel may correspond to a wireless or wireline transmission channel.

The apparatus 10 may, in embodiments, further comprise an output 214 configured to provide information related to the presentation time of the buffered media data 250, coupling the apparatus 10 to the media presentation device 400. The presentation time might correspond to information related a playout time in a playout buffer of a media streaming device, or information related to a buffered radius for a mapping or navigation service.

The control module 14 may further be configured to determine the information related to the presentation time based on information related to the predicted channel state.

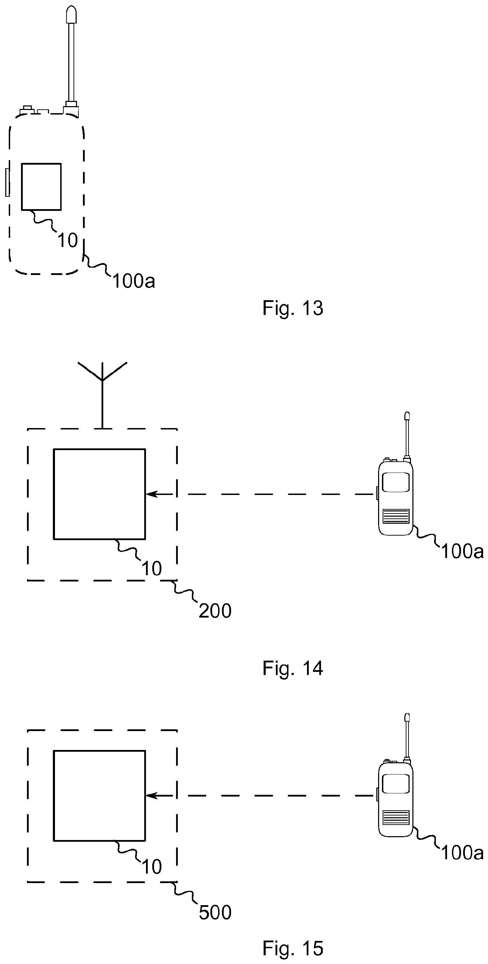

Fig. 13, Fig. 14 and Fig. 15 show block diagrams of a mobile device 100a, a base station transceiver 200, or an adaptation server 500 comprising the apparatus 10 of claim 1.

A base station transceiver can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, radio equipment, a mobile, a mobile station, a laptop, a notebook, a personal computer, a Personal Digital Assistant (PDA), a Universal Serial Bus (USB) -stick, a car, a mobile relay transceiver for D2D communication, etc. A mobile transceiver may also be referred to as User Equipment (UE) or mobile in line with the 3GPP terminology.

A base station transceiver can be located in the fixed or stationary part of the network or system. A base station transceiver may correspond to a remote radio head, a transmission point, an access point, radio equipment, a macro cell, a small cell, a micro cell, a femto cell, a metro cell etc. A base station transceiver may correspond to a base station understood as a logical concept of a node/entity terminating a radio bearer or connectivity over the air interface between a terminal/mobile transceiver and a radio access network. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point, a relay transceiver etc., which may be further subdivided in a remote unit and a central unit.

A mobile transceiver can be associated, camped on, or registered with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

An adaptation server 500 may be implemented using one or more processing units, one or more processing devices, any means for processing, such as a processor, a computer or a programmable hardware component being operable with accordingly adapted software. In other words, the functions of the adaptation server 500 may as well be implemented in software, which is then executed on one or more programmable hardware components. Such hardware components may comprise a general purpose processor, a Digital Signal Processor (DSP), a micro-controller, etc.

Fig. 14 and 15 further show the base station transceiver 200 or the adaptation server 500 comprising the apparatus 10 of claim 3, wherein the location module 16 may be configured to receive the information related to a location accuracy of a determined location from the mobile device 100a. In embodiments, the apparatus 10 comprised by the base station transceiver 200 or the adaptation server 500 may determine and provide the information related to the predicted channel state at the mobile device 100a remotely from the mobile device 100a.

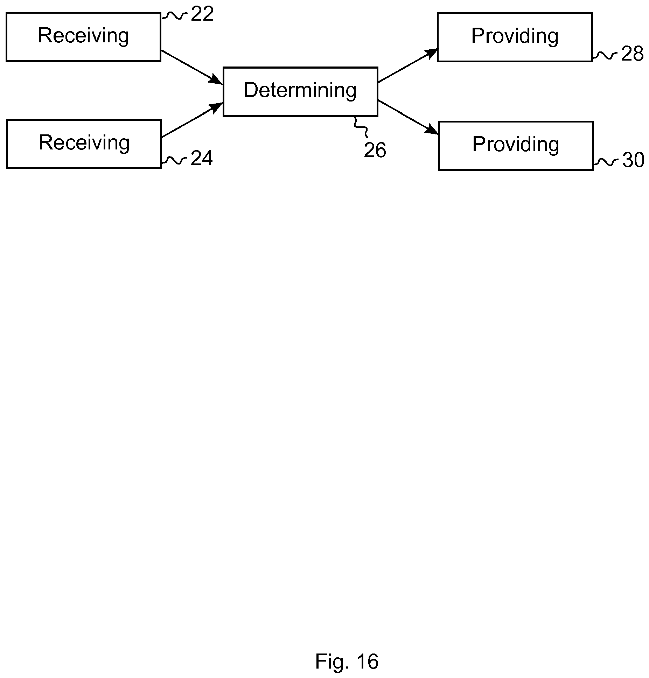

Fig. 16 shows a block diagram of a flow chart of a method for providing information related to a predicted channel state at a receiver 100 of a first radio system 300. The method comprises receiving 22 radio signals of the first radio system (300) and receiving 24 radio signals of a second radio system 310, wherein an effect of radio channel shadowing is higher on the radio signals of the second radio system 310 than on the radio signals of the first radio system 300. The method further comprises determining 26 a current channel state for the second radio system 310 based on the radio signals of the second radio system 310. It also comprises providing 28 first information related to a better predicted channel state for the first radio system 300 if the information related to the current channel state of the radio signals of the second radio system 310 indicates a better current channel state of the second radio system 310, and providing 30 second information related to a worse predicted channel state for the first radio system 300 if the information related to the current channel state of the radio signals of the second radio system 310 indicates a worse current channel state of the second radio system 310.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

Compared to predictors based on time-series extrapolation, e.g. Autoregressive integrated moving average (ARIMA) model, of the channel state history, embodiments may be more accurate and robust. In fact, field tests show the accuracy and stability of conventional time-series approaches to be insufficient for RSSI predictions for more than 2 seconds in advance. This indicates these methods could be inapplicable for long-term prediction. Compared to predictors based on radio maps (e.g., maps representing wireless signal coverage, path loss, SNR, SINR or data rate), street maps or both, embodiment may utilize less data. This may provide unique benefits with respect to:

- Privacy: The location of the user does might not need to be known for channel state prediction. This may be a particular benefit when the predictor is implemented in the network.

- Robustness: The performance of embodiments might not necessarily depend on the quality and actuality of the map. Embodiments may be only based on information that can be accurately and objectively measured at the mobile device.

- Reduced cost: Obtaining and updating radio maps and street maps is elaborate and costly. Embodiment might not depend on such data, hence, creation of such maps or expensive licenses from a map provider may be avoided in some embodiments.

- No overhead: Map-based approaches may either require map information to be signaled to the mobile device or location and other measured signaled to a central server. Some embodiments may require no signaling at all.

In general, embodiments may have the following benefits:

- Accurate long-term prediction: Embodiments may provide accurate prediction of the channel state for more than 10s in advance. Embodiments may hence enable a variety of new adaptation techniques.
- Practical: Embodiments may only use information that is already available at mobile devices (e.g., Smartphones, Tablets) at application level. Embodiments might not require changes of hardware or changes to the operation system and may, thus, be immediately implemented and integrated into existing services.
- Efficient: The computational complexity of embodiments may be low or even negligible. The most elaborate numerical function may be a low pass filter, which generates low or even insignificant computational effort on a typical mobile CPU. No or low communication overhead may be generated, if an embodiment is implemented on the mobile device.

If prediction is performed in the network, only localization accuracy and/or RSSI values may be signaled. Both integer values may be reported at the order of seconds and, thus, add insignificant communication overhead.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for locating", etc., may be provided through the use of dedicated hardware, such as "a controller", "a transmitter", "a receiver", "a transceiver", "a locator", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is further to be noted that methods disclosed in the specification or in the claims may be implemented by a device having means for performing each of the respective steps of these methods.

## Claims

1.  An apparatus (10) for providing information related to a predicted channel state at a receiver (100) of a first radio system (300), the apparatus (10) comprising
    at least one receiver module (12) to receive radio signals of the first radio system (300) and radio signals of a second radio system (310), wherein an effect of radio channel shadowing is higher on the radio signals of the second radio system (310) than on the radio signals of the first radio system (300);
    a control module (14) to determine a current channel state for the second radio system (310) based on the radio signals of the second radio system (310), and to provide information related to a better predicted channel state for the first radio system (300) if the information related to the current channel state of the radio signals of the second radio system (310) indicates a better current channel state of the second radio system (310), and to provide information related to a worse predicted channel state for the first radio system (300) if the information related to the current channel state of the radio signals of the second radio system (310) indicates a worse current channel state of the second radio system (310);

wherein the receiver (100) corresponds to a mobile device (100a), wherein the first radio system (300) corresponds to a mobile communication system (300a), and wherein the control module (14) is configured to obtain information related to a location accuracy of a determined location for the mobile device (100a) from a location module (16), and wherein the information related to the current channel state of the second radio system (310) corresponds to the information related to the location accuracy of the mobile device (100a), and wherein the control module (14) is configured to provide first information related to a better predicted channel state of the mobile communication system (300a) if the information related to the location accuracy indicates a higher accuracy, and to provide second information related to a worse predicted channel state of the mobile communication system (300a) if the information related to the location accuracy indicates a lower accuracy; and

wherein the better predicted channel state corresponds to a channel state supporting data transmission at a higher rate than in a channel state corresponding to the worse predicted channel state.

2. The apparatus (10) of claim 1, wherein the first radio system (300) corresponds to a terrestrial radio system and wherein the second radio system (310) corresponds to a satellite radio system, or wherein the first (300) and second (310) radio systems correspond to terrestrial radio systems, and wherein the first radio system (300) operates in a lower frequency range than the second radio system (310).

3. The apparatus (10) of claim 1, wherein the control module (14) is configured to provide information related to a predicted channel state in terms of at least one of the group of a receive signal power, a Receive Signal Strength Indicator, RSSI, an RSSI region or interval, a Signal-to-Noise-Ratio, SNR, a Signal-to-Interference Ratio, SIR, a Signal-to-Interference-and-Noise Ratio, SINR, a supported constellation size of the signal modulation, a supported rate of the forward error correction, a supported data rate, or a network or transmission mode.

4. The apparatus (10) of claim 1, wherein the information related to the better predicted channel state of the first radio system (300) and the information related to the worse predicted channel state of the first radio system (300) are also based on information related to a current channel state of the first radio system (300) and/or information related to a channel state history of the first radio system (300).

5. The apparatus (10) of claim 1, wherein the control module (14) is configured to use information derived from a set of empirical cumulative distribution functions, ECDF, where each element of the set reflects a channel state of the second radio system and the ECDF partially represents the statistic of the channel state of the first radio system, to provide information related to the first predicted better channel state of the first radio system (300) or information related to the second predicted worse channel state of the first radio system (300).

6. The apparatus (10) of claim 1, wherein the location module (16) is configured to obtain the information related to the location accuracy for the mobile device (100a) of the mobile communication system (300a) based on a weighted combination of one or more indicators related to a localization accuracy, wherein the one or more indicators related to the localization accuracy are weighted based on one or more accuracies of the one or more indicators, and/or wherein the location module (16) is configured to obtain the information related to the location accuracy of the determined location for the mobile device (100a) based on a source or method used to determine a location of the mobile device (100a).

7. The apparatus (10) of claim 1, wherein the location module (16) is configured to obtain information related to the location accuracy based on at least one element of the group of Global Positioning System, GPS, data, a Wireless Fidelity, WiFi, Worldwide Interoperability for Microwave Access, WiMAX, Millimetre Wave, Access Points location database, a database of base station locations, a database of Cell IDentifications, CID, fingerprinting based on radio maps and Receive Signal Strength Indicators, RSSI, triangulation or trilateration of cellular base stations using Time-Division of Arrival, TDOA, or RSSI-based estimates using reference beacon signals from 802.11 or Bluetooth devices.

8. The apparatus (10) of claim 1, wherein the control module (14) is further configured to determine information related to a presentation time of buffered media data (250) at a media presentation device (400), the media data being transmitted to the media presentation device (400) through a transmission channel (280), the apparatus (10) further comprising an output (214) configured to provide information related to the presentation time of the buffered media data (250), and wherein the control module (14) is further configured to determine the information related to the presentation time based on information related to the predicted channel state.

9. The apparatus (10) of claim 1, wherein the control module (14) is configured to further provide information related to an estimated current channel state.

10. A method for providing information related to a predicted channel state at a receiver (100) of a first radio system (300), the method comprising
receiving (22) radio signals of the first radio system (300);
receiving (24) radio signals of a second radio system (310), wherein an effect of radio channel shadowing is higher on the radio signals of the second radio system (310) than on the radio signals of the first radio system (300);
determining (26) a current channel state for the second radio system (310) based on the radio signals of the second radio system (310);
providing (28) first information related to a better predicted channel state for the first radio system (300) if the information related to the current channel state of the radio signals of the second radio system (310) indicates a better current channel state of the second radio system (310);
providing (30) second information related to a worse predicted channel state for the first radio system (300) if the information related to the current channel state of the radio signals of the second radio system (310) indicates a worse current channel state of the second radio system (310);
wherein the receiver (100) corresponds to a mobile device (100a), wherein the first radio system (300) corresponds to a mobile communication system (300a), and wherein the control module (14) is configured to obtain information related to a location accuracy of a determined location for the mobile device (100a) from a location module (16), and wherein the information related to the current channel state of the second radio system (310) corresponds to the information related to the location accuracy of the mobile device (100a), and wherein the control module (14) is configured to provide first information related to a better predicted channel state of the mobile communication system (300a) if the information related to the location accuracy indicates a higher accuracy, and to provide second information related to a worse predicted channel state of the mobile communication system (300a) if the information related to the location accuracy indicates a lower accuracy; and
wherein the better predicted channel state corresponds to a channel state supporting data transmission at a higher rate than in a channel state corresponding to the worse predicted channel state.

11. A computer program having a program code for performing the method of claim 10, when the computer program is executed on a computer, a processor, or a programmable hardware component.

**Patentansprüche**

1. Vorrichtung (10) zum Bereitstellen von Information, die bezogen ist auf einen vorhergesagten Kanalzustand an einem Empfänger (100) eines ersten Funksystems (300), wobei die Vorrichtung (10) umfasst:

mindestens ein Empfängermodul (12) zum Empfangen von Funksignalen des ersten Funksystems (300) und Funksignale eines zweiten Funksystems (310), wobei eine Wirkung von Funkkanalabschattung bei den Funksignalen des zweiten Funksystems (310) größer ist als bei den Funksignalen des ersten Funksystems (300);
ein Steuermodul (14) zum Bestimmen eines aktuellen Kanalzustands für das zweite Funksystem (310) auf Grundlage der Funksignale des zweiten Funksystems (310) und zum Bereitstellen von Information, die verbunden ist mit einem besseren vorhergesehenen Kanalzustand für das erste Funksystem (300), wenn die Information, die verbunden ist mit dem aktuellen Kanalzustand der Funksignale des zweiten Funksystems (310), einen besseren aktuellen Kanalzustand des zweiten Funksystems (310) anzeigt, und zum Bereitstellen von Information, die verbunden ist mit einem schlechteren Kanalzustand für das erste Funksystem (300), wenn die Information, die verbunden ist mit dem aktuellen Kanalzustand der Funksignale des zweiten Funksystems (310) einen schlechteren aktuellen Kanalzustand des zweiten Funksystems (310) anzeigt;
wobei der Empfänger (100) einer mobilen Vorrichtung (100a) entspricht, wobei das erste Funksystem (300) einem mobilen Kommunikationssystem (300a) entspricht und wobei das Steuermodul (14) konfiguriert ist zum Erhalten von Information, die verbunden ist mit einer Ortsgenauigkeit eines bestimmten Ortes für die mobile Vorrichtung (100a) von einem Standortmodul (16), und wobei die Information, die verbunden ist mit dem aktuellen Kanalzustand des zweiten Funksystems (310) der Information entspricht, die mit der Ortsgenauigkeit der mobilen Vorrichtung (100a) verbunden ist, und wobei das Steuermodul (14) konfiguriert ist zum Bereitstellen erster Information, die verbunden ist mit einem besseren vorhergesehenen Kanalzustand des mobilen Kommunikationssystems (300a), wenn die Information, die mit der Ortsgenauigkeit verbunden ist, eine höhere Genauigkeit anzeigt, und zum Bereitstellen zweiter Information, die mit einem schlechteren vorhergesagten Kanalzustand des mobilen Kommunikationssystems (300a) verbunden ist, wenn die Information, die mit der Ortsgenauigkeit verbunden ist, eine geringere Genauigkeit anzeigt; und

wobei der besser vorhergesagte Kanalzustand einem Kanalzustand entspricht, der eine Datenübertragung mit einer höheren Geschwindigkeit unterstützt als in einem Kanalzustand, der dem schlechter vorhergesehenen Kanalzustand entspricht.

2. Vorrichtung (10) nach Anspruch 1, wobei das erste Funksystem (300) einem terrestrischen Funksystem entspricht und wobei das zweite Funksystem (310) einem Satellitenfunksystem entspricht oder wobei das erste (300) und das zweite (310) Funksystem terrestrischen Funksystemen entspricht und wobei das erste Funksystem (300) in einem niedrigeren Frequenzbereich betrieben wird als das zweite Funksystem (310).

3. Vorrichtung (10) nach Anspruch 1, wobei das Steuermodul (14) konfiguriert ist zum Bereitstellen von Information, die verbunden ist mit einem vorhergesehenen Kanalzustand bezüglich mindestens eines aus der Gruppe von empfangener Signalleistung, RSSI (Receive Signal Strength Indicator), RSSI-Bereich oder - Intervall, SNR (Signal-to-Noise-Ratio), SIR (Signal-to-Interference Ratio), SINR (Signal-to-Interference-and-Noise Ratio), unterstützter Konstellationsgröße der Signalmodulation, unterstützter Rate der Vorwärtsfehlerkorrektur, unterstützter Datenrate oder Netzwerk- oder Übertragungsmodus.

4. Vorrichtung (10) nach Anspruch 1, wobei die Information, die verbunden ist mit dem besser vorhergesagten Kanalzustand des ersten Funksystems (300), und die Information, die mit dem schlechter vorhergesagten Kanalzustand des ersten Funksystems (300) verbunden ist, auch basieren auf Information, die verbunden ist mit einem aktuellen Kanalzustand des ersten Funksystems (300) und/oder Information, die verbunden ist mit einer Kanalzustandshistorie des ersten Funksystems (300).

5. Vorrichtung (10) nach Anspruch 1, wobei das Steuermodul (14) konfiguriert ist zum Verwenden von Information, die abgeleitet wird aus einem Satz von empirischen kumulativen Verteilungsfunktionen, ECDF, wobei jedes Element des Satzes einen Kanalzustand des zweiten Funksystems widerspiegelt und die ECDF teilweise die Statistik des Kanalzustands des ersten Funksystems widerspiegeln, zum Bereitstellen von Information, die verbunden ist mit dem ersten vorhergesehenen besseren Kanalzustand des ersten Funksystems (300) oder von Information, die verbunden ist mit dem zweiten vorhergesehenen schlechten Kanalzustand des ersten Funksystems (300).

6. Vorrichtung (10) nach Anspruch 1, wobei das Standortsmodul (16) konfiguriert ist zum Erhalten von Information, die verbunden ist mit der Ortsgenauigkeit für die mobile Vorrichtung (100a) des mobilen Kommunikationssystems (300a) auf Grundlage einer gewichteten Kombination eines oder mehrerer Indikatoren, die verbunden sind mit einer Ortsgenauigkeit, wobei der eine oder die mehreren Indikatoren, die mit der Ortsgenauigkeit verbunden sind, gewichtet sind auf Grundlage einer oder mehrerer Genauigkeiten des einen oder der mehreren Indikatoren und/oder wobei das Standortsmodul (16) konfiguriert ist zum Erhalten von Information, die verbunden ist mit der Ortsgenauigkeit des bestimmten Standorts für die mobile Vorrichtung (100a) auf Grundlage einer Quelle oder Methode, die verwendet wird zum Bestimmen eines Standorts der mobilen Vorrichtung (100a).

7. Vorrichtung (10) nach Anspruch 1, wobei das Standortsmodul (16) konfiguriert ist zum Erhalten von Information, die verbunden ist mit der Ortsgenauigkeit auf Grundlage mindestens eines Elementes der Gruppe aus GPS-Daten (Global Positioning System), WiFi (Wireless Fidelity), WiMAX (Worldwide Interoperability for Microwave Access), Millimeterwelle, Zugangspunktlagendatenbank, Datenbank von Basisstationsstandorten, CID-Datenbank (Cell IDentifications), Fingerprinting auf Grundlage von Funkkarten und RSSI (Receive Signal Strength Indicators), Triangulation oder Trilateration von zellularen Basisstationen unter Verwendung von TDOA (Time-Division of Arrival), oder RSSI-basierte Abschätzungen unter Verwenden von Referenzbakensignalen von 802.11 oder Bluetooth-Geräten.

8. Vorrichtung (10) nach Anspruch 1, wobei das Steuermodul (14) weiterhin konfiguriert ist zum Bestimmen von Information, die verbunden ist mit einer Präsentationszeit gepufferter Mediendaten (250) an einem Medienpräsentationsgerät (400), wobei die Mediendaten an das Medienpräsentationsgerät (400) durch einen Sendekanal (280) gesendet werden, wobei die Vorrichtung (10) weiterhin umfasst einen Ausgang (214), der konfiguriert ist zum Bereitstellen von Information, die verbunden ist mit der Präsentationszeit der gepufferten Mediendaten (250) und wobei das Steuermodul (14) weiterhin konfiguriert ist zum Bestimmen der Information, die verbunden ist mit der Präsentationszeit auf Grundlage von Information, die verbunden ist mit dem vorhergesagten Kanalzustand.

9. Vorrichtung (10) nach Anspruch 1, wobei das Steuermodul (14) konfiguriert ist zum weiteren Bereitstellen von Information, die verbunden ist mit einem geschätzten aktuellen Kanalzustand.

**10.** Verfahren zum Bereitstellen von Information, die verbunden ist mit einem vorhergesehenen Kanalzustand an einem Empfänger (100) eines ersten Funksystems (300), wobei das Verfahren umfasst

Empfangen (22) von Funksignalen des ersten Funksystems (300);

Empfangen (24) von Funksignalen eines zweiten Funksystems (310), wobei eine Wirkung von Funkkanalabschattung bei den Funksignalen des zweiten Funksystems (310) größer ist als bei den Funksignalen des ersten Funksystems (300);

Bestimmen (26) eines aktuellen Kanalzustands für das zweite Funksystem (310) auf Grundlage der Funksignale des zweiten Funksystems (310);

Bereitstellen (28) erster Information, die verbunden ist mit einem besser vorhergesehen Kanalzustand für das erste Funksystem (300), wenn die Information, die verbunden ist mit dem aktuellen Kanalzustand der Funksignale des zweiten Funksystems (310) einen besseren aktuellen Kanalzustand des zweiten Funksystems (310) anzeigt;

Bereitstellen (30) zweiter Information, die verbunden ist mit einem schlechter vorhergesehen Kanalzustand für das erste Funksystem (300), wenn die Information, die verbunden ist mit dem aktuellen Kanalzustand der Funksignale des zweiten Funksystems (310), einen schlechteren aktuellen Kanalzustand des zweiten Funksystems (310) anzeigt;

wobei der Empfänger (100) einer mobilen Vorrichtung (100a) entspricht, wobei das erste Funksystem (300) einem mobilen Kommunikationssystem (300a) entspricht und wobei das Steuermodul (14) konfiguriert ist zum Erhalten von Information, die verbunden ist mit einer Ortsgenauigkeit eines bestimmten Ortes für die mobile Vorrichtung (100a) von einem Standortmodul (16), und wobei die Information, die verbunden ist mit dem aktuellen Kanalzustand des zweiten Funksystems (310) der Information entspricht, die mit der Ortsgenauigkeit der mobilen Vorrichtung (100a) verbunden ist, und wobei das Steuermodul (14) konfiguriert ist zum Bereitstellen erster Information, die verbunden ist mit einem besseren vorhergesehenen Kanalzustand des mobilen Kommunikationssystems (300a), wenn die Information, die mit der Ortsgenauigkeit verbunden ist, eine höhere Genauigkeit anzeigt, und zum Bereitstellen zweiter Information, die mit einem schlechteren vorhergesagten Kanalzustand des mobilen Kommunikationssystems (300a) verbunden ist, wenn die Information, die mit der Ortsgenauigkeit verbunden ist, eine geringere Genauigkeit anzeigt; und

wobei der besser vorhergesagte Kanalzustand einem Kanalzustand entspricht, der eine Datenübertragung mit einer höheren Geschwindigkeit unterstützt als in einem Kanalzustand, der dem schlechter vorhergesehenen Kanalzustand entspricht.

**11.** Computerprogramm, das einen Programmcode aufweist für das Durchführen des Verfahrens nach Anspruch 10, wenn das Computerprogramm auf einem Computer, einem Prozessor oder einer programmierbaren Hardware-Komponente ausgeführt wird.

## Revendications

**1.** Appareil (10) pour fournir des informations relatives à un état de canal prédit au niveau d'un récepteur (100) d'un premier système radio (300), l'appareil (10) comprenant

au moins un module récepteur (12) pour recevoir des signaux radio du premier système radio (300) et des signaux radio d'un second système radio (310), dans lequel un effet d'ombre de canal radio est plus important sur les signaux radio du second système radio (310) que sur les signaux radio du premier système radio (300) ;

un module de commande (14) pour déterminer un état de canal actuel pour le second système radio (310) sur la base des signaux radio du second système radio (310), et pour fournir des informations relatives à un meilleur état de canal prédit pour le premier système radio (300) si les informations relatives à l'état de canal actuel des signaux radio du second système radio (310) indiquent un meilleur état de canal actuel du second système radio (310), et pour fournir des informations relatives à un pire état de canal prédit pour le premier système radio (300) si les informations relatives à l'état de canal actuel des signaux radio du second système radio (310) indiquent un pire état de canal actuel du second système radio (310) ;

dans lequel le récepteur (100) correspond à un dispositif mobile (100a), dans lequel le premier système radio (300) correspond à un système de communication mobile (300a), et dans lequel le module de commande (14) est configuré pour obtenir des informations relatives à une précision de localisation d'une localisation déterminée pour le dispositif mobile (100a) à partir d'un module de localisation (16), et dans lequel les informations relatives à l'état de canal actuel du second système radio (310) correspondent aux informations relatives à la précision de localisation du dispositif mobile (100a), et dans lequel le module de commande (14) est configuré pour fournir des premières informations relatives à un meilleur état de canal prédit du système de communication mobile (300a) si les informations relatives à la précision de localisation indiquent une précision supérieure, et pour fournir des secondes informations relatives à un pire état de canal prédit du système de communication mobile (300a) si les informations relatives à la précision de localisation indiquent une précision inférieure ; et

dans lequel le meilleur état de canal prédit correspond à un état de canal prenant en charge une transmission de données à un débit supérieur à celui dans un état de canal correspondant au pire état de canal prédit.

2. Appareil (10) selon la revendication 1, dans lequel le premier système radio (300) correspond à un système radio terrestre et dans lequel le second système radio (310) correspond à un système radio par satellite, ou dans lequel le premier système radio (300) et le second système radio (310) correspondent à des systèmes radio terrestres, et dans lequel le premier système radio (300) fonctionne dans une plage de fréquences inférieure à celle du second système radio (310).

3. Appareil (10) selon la revendication 1, dans lequel le module de commande (14) est configuré pour fournir des informations relatives à un état de canal prédit en fonction d'au moins un élément dans le groupe constitué d'une puissance du signal reçu, d'un indicateur d'intensité du signal reçu, RSSI, d'une région ou d'un intervalle RSSI, d'un rapport signal sur bruit, SNR, d'un rapport signal sur interférence, SIR, d'un rapport signal sur interférence plus bruit, SINR, d'une taille de constellation prise en charge de la modulation de signal, d'un débit pris en charge de la correction d'erreurs sans voie de retour, d'un débit de données pris en charge ou d'un mode de réseau ou de transmission.

4. Appareil (10) selon la revendication 1, dans lequel les informations relatives au meilleur état de canal prédit du premier système radio (300) et les informations relatives au pire état de canal prédit du premier système radio (300) sont également basées sur des informations relatives à un état de canal actuel du premier système radio (300) et/ou sur des informations relatives à un historique d'états de canal du premier système radio (300).

5. Appareil (10) selon la revendication 1, dans lequel le module de commande (14) est configuré pour utiliser des informations issues d'un ensemble de fonctions de distribution cumulatives empiriques, ECDF, où chaque élément de l'ensemble reflète un état de canal du second système radio et l'ECDF représente partiellement la statistique de l'état de canal du premier système radio, pour fournir des informations relatives au premier meilleur état de canal prédit du premier système radio (300) ou des informations relatives au second pire état de canal prédit du premier système radio (300).

6. Appareil (10) selon la revendication 1, dans lequel le module de localisation (16) est configuré pour obtenir les informations relatives à la précision de localisation pour le dispositif mobile (100a) du système de communication mobile (300a) sur la base d'une combinaison pondérée d'un ou de plusieurs indicateurs relatifs à une précision de localisation, dans lequel le ou les indicateurs relatifs à la précision de localisation sont pondérés sur la base d'une ou de plusieurs précisions du ou des indicateurs, et/ou dans lequel le module de localisation (16) est configuré pour obtenir les informations relatives à la précision de localisation de la localisation déterminée pour le dispositif mobile (100a) sur la base d'une source ou d'un procédé utilisé pour déterminer une localisation du dispositif mobile (100a).

7. Appareil (10) selon la revendication 1, dans lequel le module de localisation (16) est configuré pour obtenir des informations relatives à la précision de localisation sur la base d'au moins un élément du groupe constitué de données de système mondial de positionnement, GPS, de technologie WiFi, d'interopérabilité mondiale des accès d'hyperfréquences, WiMAX, d'ondes millimétriques, de base de données de localisation de points d'accès, d'une base de données de localisations de station de base, d'une base de données d'identifications de cellule, CID, d'une empreinte digitale sur la base de cartes radio et d'indicateurs d'intensité du signal reçu, RSSI, de triangulation ou de trilatération de stations de base cellulaires en utilisant la répartition dans le temps d'arrivée, TDOA, ou des estimations basées sur le RSSI utilisant des signaux de balise de référence de dispositifs 802.11 ou Bluetooth.

8. Appareil (10) selon la revendication 1, dans lequel le module de commande (14) est en outre configuré pour déterminer des informations relatives à un temps de présentation de données multimédia mises en mémoire en tampon (250) au niveau d'un dispositif de présentation multimédia (400), les données multimédias étant transmises au dispositif de présentation multimédia (400) par l'intermédiaire d'un canal de transmission (280), l'appareil (10) comprenant en outre une sortie (214) configurée pour fournir des informations relatives au temps de présentation des données multimédia mises en mémoire tampon (250), et dans lequel le module de commande (14) est en outre configuré pour déterminer les informations relatives au temps de présentation sur la base d'informations relatives à l'état de canal prédit.

9. Appareil (10) selon la revendication 1, dans lequel le module de commande (14) est configuré pour fournir en outre des informations relatives à un état de canal actuel estimé.

**10.** Procédé pour fournir des informations relatives à un état de canal prédit au niveau d'un récepteur (100) d'un premier système radio (300), le procédé comprenant

la réception (22) de signaux radio du premier système radio (300) ;

la réception (24) de signaux radio d'un second système radio (310), dans lequel un effet d'ombre de canal radio est plus important sur les signaux radio du second système radio (310) que sur les signaux radio du premier système radio (300) ;

la détermination (26) d'un état de canal actuel pour le second système radio (310) sur la base des signaux radio du second système radio (310) ;

la fourniture (28) de premières informations relatives à un meilleur état de canal prédit pour le premier système radio (300) si les informations relatives à l'état de canal actuel des signaux radio du second système radio (310) indiquent un meilleur état de canal actuel du second système radio (310) ;

la fourniture (30) de secondes informations relatives à un pire état de canal prédit pour le premier système radio (300) si les informations relatives à l'état de canal actuel des signaux radio du second système radio (310) indiquent un pire état de canal actuel du second système radio (310) ;

dans lequel le récepteur (100) correspond à un dispositif mobile (100a), dans lequel le premier système radio (300) correspond à un système de communication mobile (300a), et dans lequel le module de commande (14) est configuré pour obtenir des informations relatives à une précision de localisation d'une localisation déterminée pour le dispositif mobile (100a) à partir d'un module de localisation (16), et dans lequel les informations relatives à l'état de canal actuel du second système radio (310) correspondent aux informations relatives à la précision de localisation du dispositif mobile (100a), et dans lequel le module de commande (14) est configuré pour fournir des premières informations relatives à un meilleur état de canal prédit du système de communication mobile (300a) si les informations relatives à la précision de localisation indiquent une précision supérieure, et pour fournir des secondes informations relatives à un pire état de canal prédit du système de communication mobile (300a) si les informations relatives à la précision de localisation indiquent une précision inférieure ; et

dans lequel le meilleur état de canal prédit correspond à un état de canal prenant en charge une transmission de données à un débit supérieur à celui dans un état de canal correspondant au pire état de canal prédit.

**11.** Programme informatique possédant un code de programme pour exécuter le procédé selon la revendication 10, lorsque le programme informatique est exécuté sur un ordinateur, un processeur ou un composant matériel programmable.

Fig. 1

Fig. 2

| Index 0,...,M | Localization Technique | |
|---|---|---|
| 0 | Current GPS fix | 1600a |
| 1 | Old GPS fix | 1600b |
| 2 | Network | 1600c |
| 3 | Old Network | 1600d |
| 4 | Unknown | 1600e |

Fig. 3

GPS Status

● GPS on

Accuracy (meters)

3

r ~ 602

Fig. 4

Fig. 5

1600a GPS

1600c Network

1600f Other

1600x

Select

r

602

Location Manager

16

e

Channel State Estimator

14

Channel State, e.g., RSSI

Fig. 6

Fig. 7

Fig. 8

Fig. 9

Fig. 10

Fig. 11

Fig. 12

Fig. 13

Fig. 14

Fig. 15

Fig. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Android Developer Portal: Location API Description. Google Inc, 20 September 2014
- **ALCATEL-LUCENT.** *Bell Labs and net mobile AG improve the quality of video streaming in vehicles on the move,* 17 June 2014, http://www.alcatel-lucent.com/press/2014/bell-labs-and-net-mobile-ag-improve-quality-video-streaming-vehicles-move
- A Survey of Wireless Path Loss Prediction and Coverage Mapping Methods. **PHILLIPS, D. SICKER ; D. GRUNWALD.** Communications, Surveys Tutorials. IEEE, 2013, vol. 15, 255-270
- **M. PIACENTINI ; F. RINALDI.** Path loss prediction in urban environment using learning machines and dimensionality reduction techniques. *Computational Management Science,* 2011, vol. 8 (4), 371-385
- **POPESCU, I. NAFOMITA ; P. CONSTANTINOU ; A. KANATAS ; N. MORAITIS.** Neural networks applications for the prediction of propagation path loss in urban environments. *Vehicular Technology Conference, 2001. VTC 2001 Spring. IEEE VTS 53rd,* 2001, vol. 1
- Toward green media delivery: location-aware opportunities and approaches. **ABOU-ZEID HATEM et al.** IEEE WIRELESS COMMUNICATIONS. IEEE SERVICE CENTER, 01 August 2014, vol. 21, 38-46
- Ontology-based reasoning for context-aware radios: insights and findings from prototype development. **POSTON J D et al.** 2005 1ST IEEE INTERNATIONAL SYMPOSIUM ON NEW FRONTIERS IN DYNAMIC SPECTRUM ACCESS NETWORKS. IEEE, 08 November 2005, 634-637